# EUROPÄISCHE PATENTSCHRIFT

(11) **EP 3 052 545 B1**
(45) Veröffentlichungstag und Bekanntmachung des Hinweises auf die Patenterteilung: **25.07.2018**
(21) Anmeldenummer: 14803038.0
(22) Anmeldetag: 02.10.2014
(51) Int. Cl.: C08G 73/02, A61K 48/00, C08G 81/00

(54) **NEUE POLY(ETHYLENIMIN) BASIERTE COPOLYMERE ZUR ANBINDUNG UND FREISETZUNG VON GENETISCHEM MATERIAL, INSBESONDERE VON DNA/RNA, SOWIE VERFAHREN ZU DEREN HERSTELLUNG UND VERWENDUNG**
NEW POLY(ETHYLENE IMINE)-BASED COPOLYMERS FOR BONDING TO AND RELEASING GENETIC MATERIAL, IN PARTICULAR DNA/RNA, AND METHOD FOR THE PRODUCTION AND USE OF SAME
NOUVEAUX COPOLYMÈRES À BASE DE POLY(ÉTHYLÈNE-IMINE) POUR LA LIAISON ET LA LIBÉRATION DE MATÉRIEL GÉNÉTIQUE, EN PARTICULIER D'ADN/ARN, PROCÉDÉ DE PRÉPARATION ET UTILISATION DE CES COPOLYMÈRES

(30) Priorität: 02.10.2013 DE 102013016750
(43) Veröffentlichungstag der Anmeldung: 10.08.2016
(73) Patentinhaber: SmartDyeLivery GmbH, 07743 Jena (DE)
(72) Erfinder: ENGLERT, Christoph, 07743 Jena (DE); TAUHARDT, Lutz, 07747 Jena (DE); GOTTSCHALDT, Michael, D-07751 Golmsdorf (DE); SCHUBERT, Ulrich S., 07743 Jena (DE)
(74) Vertreter: Donath, Dirk
(86) Internationale Anmeldenummer: PCT/DE2014/000500
(87) Internationale Veröffentlichungsnummer: WO 2015/048940

(56) Entgegenhaltungen:
- EP-A1- 2 586 815
- WO-A1-2013/137736
- WO-A2-2012/057628
- US-A- 3 251 778
- CHRISTOPH ENGLERT ET AL: "Linear Poly(ethylene imine)-Based Hydrogels for Effective Binding and Release of DNA", BIOMACROMOLECULES, Bd. 15, Nr. 4, 14. April 2014 (2014-04-14) , Seiten 1124-1131, XP055164820, US ISSN: 1525-7797, DOI: 10.1021/bm4017572

## Beschreibung

Neue Poly(ethylenimin) basierte Copolymere zur Anbindung und Freisetzung von genetischem Material, insbesondere von DNA/RNA, sowie Verfahren zu deren Herstellung und Verwendung
Die Erfindung betrifft neue Poly(ethylenimin) basierte Copolymere, welche aus Ethylenimin- und 2-Oxazolineinheiten bestehen, aber im Vergleich zu bekannten Poly(ethylenimin) basierten Copolymeren (PEI) eine überraschend hohe Funktionalität aufweisen, gemäß Patentansprüche 1 und 2. PEIs dieser Art sind zur Anbindung und Freisetzung von DNA/RNA bekannt. Des Weiteren schließt die Erfindung auch das Verfahren zu deren Herstellung sowie funktionsspezifische Verwendungen der vorgeschlagenen Copolymere ein, gemäß Patentanspruch 3. Die vorgeschlagenen Poly(ethylenimin) basierten Copolymere können beispielsweise zur Funktionalisierung von Oberflächen, zur Entwicklung von DNA-Chipsystemen für die mobile Analytik und als Materialien für antifouling Beschichtungen von Sensoren verwendet werden.

Es ist bereits 2-(3-butenyl)-2-oxazolin als Monomer bekannt (A. Gress, A. Völkel, H. Schlaad; Thio-click modification of poly[2-(3-butenyl)-2-oxazoline] Macromolecules 40, 2007, 7928-7933), welches durch Funktionalisierung von (2-Chlorethylamin)-hydrochlorid mit *N*-Succinimidyl-4-pentenat, gefolgt von einem Ringschluss, dargestellt wird. Das über 3 Stufen hergestellte Monomer 2-(3-Butenyl)-2-oxazolin wird zu Poly(2-(3-butenyl)-2-oxazolin) polymerisiert. Das unter vergleichsweise hohem Zeitaufwand erhaltene Homopolymer enthält keine freien Amingruppen, die zur Anbindung von genetischem Material, insbesondere DNA/RNA, von Nöten sind.

Bekannt sind auch Poly(ethylenimin) basierte Copolymere (H. Tian, F. Li, J. Chen, Y. Huang, X. Chen: N-Isopropylacrylamide-Modified Polyethylenimines as Effective Gene Carriers, Macromolecular. Bioscience 12, 2012, 1680-1688), bei denen die Funktionalisierung mit N-Isopropylacrylamid durch eine sogenannte Michael-Addition erfolgt. Diese synthetisierten Derivate zeigen Bindungsaffinität zu plasmid DNA. Allerdings führt die Funktionalisierung des PEI mittels besagter Michael-Addition zu Seitenketten ohne mögliche Mehrfachbindungen, wodurch die Funktionalisierung beschränkt ist. Insbesondere können auf diese Weise keine Substrate mit funktionalisierter Oberfläche oder strukturierte Hydrogele, beispielsweise für Beads, Partikel etc., zur Anbindung und Freisetzung von genetischem Material hergestellt werden.

Es ist auch bekannt, dass N-Hydroxysuccinimid (NHS) oder das etwas polarere N-Hydroxysulfosuccinimid (NHSS) unter milden Bedingungen mit carboxylhaltigen Komponenten (z. B. Butansäure) zu so genannten "Aminoacylestern" reagieren (D. Sehgal, I. K. Vijay: A method for the high efficiency of water-soluble carbodiimide-mediated amidation, Anal. Biochem. 218, 1994, 87-91).
Mit diesen Aminoacylestern können Amingruppen funktionalisiert werden, jedoch ist diese Funktionalisierung ausschließlich auf primäre Amingruppen beschränkt. Keine Erwähnung findet außerdem die Einführung von funktionalisierten Seitenketten in Polymere. Wie vorgenannt, sind hier ebenfalls keine Mehrfachbindungen möglich, so dass wiederum keine Substrate mit funktionalisierter Oberfläche oder strukturierte Hydrogele, beispielsweise für Beads, Partikel etc., zur Anbindung und Freisetzung von genetischem Material, insbesondere DNA/RNA, herstellbar sind.

Bekannt ist weiterhin die Funktionalisierung von verzweigtem PEI mit Acetat, Butanoat und Hexanoat durch EDAC/NHS (A. M. Doody, J. N. Korley, K. P. Dang, P. N. Zawaneh, D. Putnam: Characterizing the structure/function parameter space of hydrocarbon-conjugated branched polyethylenimine for DNA delivery in vitro, J. Control. Release 116, 2006, 227-237). Wie bereits vorher erwähnt, ist die Funktionalisierung erneut nur auf primäre Amingruppen beschränkt. Außerdem ist die Funktionalisierung von Polyethylenmin mittels Acet-, Propion- und Butansäueranhydrid beschrieben (S. Nimesh, A. Aggarwal, P. Kumar, Y. Singh, K.C. Gupta, R. Chandra: Influence of acyl chain length on transfection mediated by acylated PEI nanoparticles, Int. J. Pharm. 337, 2007, 265-274). In beiden Fällen besteht Bindungsaffinität zu genetischem Material, wie DNA/RNA, jedoch sind wiederum keine Mehrfachbindungen der eingeführten Seitenketten erwähnt, wodurch ebenfalls die Nachteile der Einschränkung vorbeschriebener Verwendungsfunktionalität gegeben sind.

Es sind des Weiteren Polyalkylenimin-Hydrogele mit einstellbaren Degradationsraten bekannt (M. Carnahan, J. Butlin: Crosslinked Polyalkyleneimine Hydrogels with Tunable Degradation Rates, WO 2009/102952 A2). Hierbei werden unterschiedlich funktionalisierte Polyalkylenimine, deren Reaktionsweg nicht aufgezeigt wird, bzw. verzweigtes Polyethylenimin, mittels aktiviertem Polyethylenglycol vernetzt, sodass nur ein Teil der ursprünglichen Amin-Gruppen des PEIs für eine spätere biologische Anwendung zur Verfügung steht. Über das Verhältnis der Mengen des Ausgangspolymers und des Vernetzers erfolgt die Kontrolle des Vernetzungsgrades lediglich auf indirektem Weg. Der Fokus liegt hier auf der Synthese von Hydrogelnetzwerken. Die Weiterverwendung von vorhandenen Funktionalitäten, beispielsweise auf Oberflächen oder zur Synthese strukturierter Hydrogele zur Anbindung und Freisetzung von genetischem Material, wird nicht weiter ausgeführt.

Weiterhin ist die partielle alkalische Hydrolyse von Poly(N-acetylethylimin) bekannt (Y. Chujo, Y. Yoshifuji, K. Sada, T. Saegusa: A Novel Nonionic Hydrogel from 2-Methyl-2-oxazoline, Macromolecules 22, 1989, 1074-1077). Eine anschließende Vernetzung zu Polymernetzwerken ist, wie bereits vorher beschrieben, nur über vorhandene Ethylenimineinheiten möglich. Diese stehen für die Anbindung und spätere Freisetzung von genetischem Material nicht mehr zur Verfügung. Eine exakte Quantifizierung von freien Ethylenimineinheiten im hergestellten Hydrogel ist nicht möglich. Außerdem findet die Einführung von funktionalisierten Seitenketten in die Polymere keine Erwähnung, womit die Anwendungsmöglichkeiten, beispielsweise einer Oberflächenfunktionalisierung, entfallen. Eine Einführung von Seitenketten mit ungesättigten Funktionalitäten ist auf dem Weg der Hydrolyse nicht möglich.

Bekannt ist die Alkylierung bzw. Acylierung von Polyethyleniminen und die Untersuchung der Freisetzung von Plasmid-DNA aus diesen Copolymeren (M. Thomas, A. M. Klibanov: Enhancing polyethylenimine's delivery of plasmid DNA into mammalian cells, PNAS 99, 2002, 14640-14645). Keine Erwähnung findet auch hier die Einführung von ungesättigten funktionellen Gruppen und die Möglichkeit, die Copolymere mittels Vernetzer zu Hydrogelen umzusetzen.

Weiterhin ist speziell die partielle Acetylierung von Polyethylenimin über Acetanhydrid ausführlich untersucht (M. L. Forrest, G. E. Meister, J. T. Koerber, D. W. Packl: Partial Acetylation of Polyethylenimine Enhances In Vitro Gene Delivery, Pharm. Res. 21, 2004, 365-371). Durch die Abwesenheit von Mehrfachbindungen in den Seitenketten sind ebenfalls die Nachteile der Einschränkung vorher beschriebener Verwendungsmöglichkeiten gegeben.

Die Funktionalisierung und Vernetzung von verzweigtem Polyethylenimin mit mono-, bi- oder multifunktionellen Komponenten findet ebenfalls Erwähnung (P. Tarcha, T. Merdan, E. Wagner, J. Klöckner: Chemically modified polycation polymer for siRNA delivery, WO 2007/084797). Die Möglichkeit, ungesättigte funktionelle Gruppen mittels Michael-Addition einzubringen, wird genannt, jedoch bezüglich einer praktischen Umsetzung nicht weiter beschrieben. Demnach ergibt sich auch hier der fehlende Bezug zu einer möglichen Anwendung dieser Polymere zur Oberflächenfunktionalisierung oder Strukturierung von Hydrogelen, beispielsweise für Beads, Partikel etc., zur Anbindung und Freisetzung von genetischem Material, insbesondere DNA/RNA. Außerdem sind vorhandene mögliche Ethylenimineinheiten innerhalb eines Copolymers über einen Linker verbunden.

Auch die Funktionalisierung mit langkettigen Säurehalogeniden ist bekannt (L. Yan, W. T. S. Huck, X.-M. Zhao, G. M. Whitesides: Patterning Thin Films of Poly(ethylene imine) on a Reactive SAM Using Microcontact Printing, Langmuir 15, 1999, 1208-1214) bringt aber erneut den Nachteil der fehlenden Mehrfachbindung in der Seitenkette und damit verbundene Anwendungsmöglichkeiten mit sich.

Bekannt ist die Synthese wasserlöslicher Copolymere verschiedenster Zusammensetzung (WO 2011/162366 A1). Die Einführung von Mehrfachbindungen in verzweigtes Polyethylenimin wird lediglich in Zusammenhang mit Ethylenglykoleinheiten in der Seitenkette, deren Ziel die Synthese wasserlöslicher Polymere ist, beschrieben. Eine Anbindung von genetischem Material wird durch die prozentual verringerte Dichte an positiven Ladungen, besonders für längere Seitenketten, extrem eingeschränkt. Die gewünschte Löslichkeitseigenschaft wird speziell durch eine hohe Anzahl an Ethylenglykoleinheiten erreicht, die jedoch eine Anbindung, insbesondere von DNA, erschweren. Um dennoch eine möglichst effiziente Anbindung von genetischem Material beobachten zu können, muss der Ethyleniminanteil im Copolymer eine bestimmte Größenordnung erreichen. Ausgehend von dieser Zusammensetzung ist jedoch eine Wasserlöslichkeit nicht mehr möglich. Eine Anwendung dieser ungesättigten, funktionalisierten Copolymere, beispielsweise zur Strukturierung von Hydrogelen, findet keine Erwähnung.

Es ist des Weiteren die partielle Hydrolyse von Poly(2-oxazolinen) bekannt (F. Wiesbrock, F. Stelzer, C. Slugovic, N. Noormofidi, V. Kaltenhauser, E. Kreutzwiesner, K. Rametsteiner: Use of contact biocides based on poly(2-substituted) oxazolines, WO 2012/149591). Die Synthese eines Mehrfachbindungsenthaltenden Copolymers auf diesem Reaktionsweg ist nicht möglich. Eine Hydrolyse führt zur Zerstörung der Mehrfachbindungsfunktionalität unter den benötigten Bedingungen.

US 3 251 778 A offenbart Polyalkylenimine und Derivate davon, wie insbesondere Polyethylenimin und Polyethylenimin-Derivate, die verschiedene Gruppen enthalten, wie bspw. die oxyalkylierten, acylierten, alkylierten, carbonylierten, olefinierten und anderen Derivate, die durch Einführen solcher Gruppen einzeln, abwechselnd, in Kombination usw. hergestellt werden, einschließlich solcher Derivate, die durch Variieren der Reihenfolge des Hinzufügens solcher Gruppen, durch Erhöhen der Anzahl und Reihenfolge des Hinzufügens solcher Gruppen hergestellt werden.

Die EP 2 586 815 A1 offenbart die Bildung eines wasserlöslichen Nanopartikel-Komplexes aus Polymeren, bevorzugt Ethylenglykoleinheiten, in dem eine Vielzahl von Nanopartikeln akkumuliert werden.

Die Gleichmäßigkeit und Stabilität durch Bildung eines Komplexes von Nanopartikeln unter Verwendung dieses wasserlöslichen Polymers erlaubt grundsätzlich die Verwendung dieser Nanopartikeln in biochemischen Anwendungen.

Bei dieser Synthese von wasserlöslichen Nanopartikelkomplexen kann ein bspw. ein Copolymer bestehend aus 3 Monomereinheiten verwendet werden, wobei ungesättigte funktionelle Endgruppen (hier als hydrophile Gruppen beschrieben) in der Seitenkette des Polymerbackbones auftreten können, jedoch nur unter der Bedingung, dass sie über Ethylenglykoleinheiten mit dem Polymerrückgrat verbunden sind.

Des Weiteren enthält das Copolymer gemäß dieser technischen Lösung Ethylenimineinheiten und eine weitere funktionelle Seitenkette (Amidgruppe und mindestens eine weitere zusätzliche funktionelle Gruppe).

Die WO 2013/137736 A1offenbart ein biokompatibles medizinisches Produkt in Form von Implantaten, insbesondere Knochen- und Weichgewebeimplantate, Klebstoff Implantatebeschichtungen, Nahtmaterial, Gewebekleber und Klebstoffgewebebändern, welches mindestens 1% Trockensubstanz eines kovalent vernetzten Polymers aufweist, das durch Umsetzung eines nucleophil aktiviert Polyoxazolin (NU-POX) mit einem elektrophilen Vernetzungsmittel erhalten wird.

Die WO 2012/057628 A2 offenbart einen biokompatiblen Gewebe-Klebstoff in Form eines kovalent vernetzten Polymers, das durch Umsetzen eines elektrophil aktivierten Polyoxazolin (EL-POX) mit einem nukleophilen Vernetzungsmittel erhalten wird.

Der Erfindung liegt deshalb die Aufgabe zugrunde, neue Poly(ethylenimin) basierte Copolymere zu schaffen, die möglichst aufwandgering und maßgeschneidert herstellbar sind sowie eine hohe Funktionalität für universelle effektive Verwendungen aufweisen, ohne jedoch deren Bindungsfähigkeit gegenüber genetischem Material, insbesondere DNA/RNA, einzuschränken.

Beispielsweise sollen Hydrogele aus den Poly(ethylenimin) basierten Copolymeren mit hoher Bindungsaffinität zu DNA/RNA darstellbar sein.

Gelöst wird diese Aufgabe durch neue Poly(ethylenimin) basierte Copolymere zur Anbindung und Freisetzung von genetischem Material, insbesondere DNA/RNA, bestehend aus Ethylenimin- und 2-Oxazolineinheiten, die eine Verbindung der allgemeiner Formel I aufweisen: 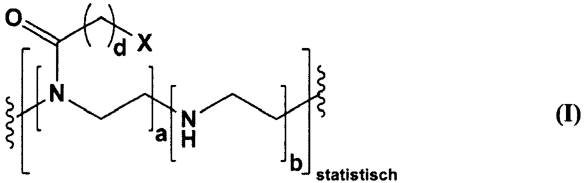 mit:
- a, b:: Anteil der jeweiligen Monomereinheiten (a, b > 0)
- d:: Länge der Seitenkette (1 bis 20)
- X:: funktionelle Gruppe der 2-Oxazolineinheit (über Doppel- oder Drei fachbindung)
Copolymer-Kettenlänge zwischen 2 und 1000000 Einheiten

Dabei ist es vorteilhaft, wenn diese neuen Poly(ethylenimin) basierten Copolymere jeweils unterschiedliche Oxazolineinheiten gemäß der allgemeinen Formel II aufweisen: 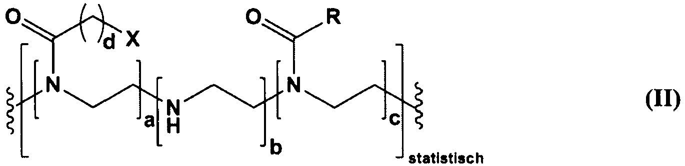 mit:
- a, b, c:: Anteil der jeweiligen Monomereinheiten (a, b, c > 0)
- d:: Länge der Seitenkette (1 bis 20)
- X:: funktionelle Gruppe der 2-Oxazolineinheit (über Doppel- oder Dreifachbindung)
- R:: H- oder organischer Rest (z. B. Alkyl- und Aryl-Rest),
Copolymer-Kettenlänge zwischen 2 und 1000000 Einheiten

Die Zusammensetzung der maßgeschneiderten Copolymere kann auf einfache und schnelle Weise mit Hilfe der Kernspinresonanzspektroskopie bestimmt werden. Die Struktur der erfindungsgemäßen Copolymere ermöglicht Mehrfachbindungen im Copolymerrückgrat und schafft damit Voraussetzungen für Funktionalitäten, ohne allerdings gegenüber dem bekannten Stand der Technik die Bindungsaffinität für genetisches Material einzuschränken. Die besagten Funktionalitäten ermöglichen somit weitere Anwendungen, bei welchen die Bindung/Freigabe insbesondere von DNA und RNA voll unterstützt wird. Beispielsweise kann mittels an sich bekannter Click-Chemie (Thiol-en Photoaddition, Azid-Click) eine weitere Komponente an das beschriebene Copolymer addiert werden. Der große Vorteil des hergestellten Copolymers ist die Eigenschaft, dass vorhandene und exakt quantifizierte Aminogruppen von dieser Reaktion unberührt bleiben. Ihre Affinität zur Anbindung und Freisetzung von genetischem Material bleibt somit ebenfalls unbeeinträchtigt und kann weiterhin über die Einstellung des PEI-Gehaltes im Copolymer beeinflusst werden. Der Fokus liegt weiterhin auf der Einführung von kurzen, einfachen Seitenketten, welche keinen Einfluss auf eine biologische Anwendung haben und somit quantitative Aussagen zur Anbindung von genetischem Material zulassen.

In den Unteransprüchen sind spezielle Verwendungen der vorgeschlagenen Copolymere aufgrund deren vorbeschriebenen Funktionalitäten aufgeführt. Die Copolymere können beispielsweise auf funktionalisierten Oberflächen aufgebracht werden und eine Anbindung und Freisetzung von genetischem Material an ihnen ermöglichen. Durch unvollständige Oberflächenanbindung sind freie Mehrfachbindungen vorhanden, die zum schrittweisen Aufbau von Hydrogelschichten auf der gewünschten Oberfläche genutzt werden können. Ein weiterer Vorteil ist die Möglichkeit der Strukturierung von dreidimensionalen Polymernetzwerken, sogenannten Hydrogelen. Mit Hilfe eines bifunktionellen Linkers (Dithiol) können die Copolymere zu solchen Hydrogelen vernetzt werden. Ein entscheidender Nachteil von solchen Polymernetzwerken ist die Eigenschaft ihrer absoluten Unlöslichkeit in jeglichen Lösungsmitteln. Daher ist eine Bestimmung des definierten PEI-Gehaltes in der Gelstruktur über (Lösungs-) Kernspinresonanzspektroskopie (wie für die Copolymere) nicht möglich. Über die oben erwähnte Charakterisierung des Copolymers und die anschließende Vernetzung über die ungesättigten Funktionalitäten (Aminogruppen bleiben unberührt) kann dennoch eine exakte Aussage über den im Hydrogel vorhandenen PEI-Anteil gemacht werden.

Die einfache und schnelle Durchführung beispielsweise der Thiol-en Photoaddition durch Bestrahlung der Probe mit UV-Licht (365nm) führt außerdem zur Möglichkeit, maßgeschneiderte Hydrogelbeads in situ herzustellen. Auch hier kann die gezielte Anbindung und Freisetzung von genetischem Material stattfinden.

Dargestellt werden die neuen Poly(ethylenimin) basierten Copolymere erfindungsgemäß
durch eine Synthese der allgemeinen Formel III:

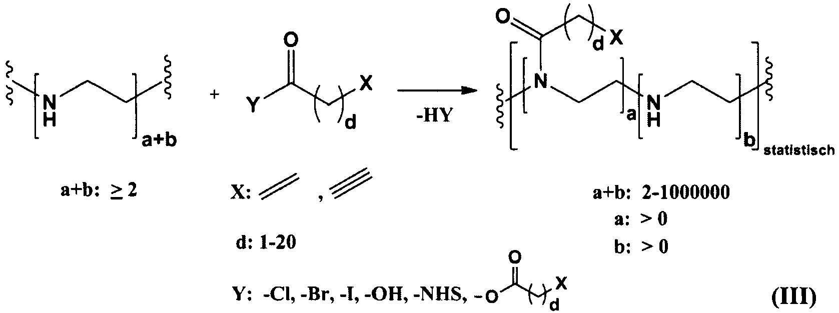

Vorteilhaft ist, wenn im Fall von -OH oder -NHS als Säure die Funktionalisierung in Gegenwart eines Aktivierungsreagenz, insbesondere EDC (1-Ethyl-3-(3-dimethylaminopropyl)carbodiimid) oder DCC (Dicyclohexylcarbodiimid) eingeführt wird.

Die funktionelle Seitenkette kann aber auch über eine nachträgliche Funktionalisierung mittels ungesättigter Säureanhydride oder -halogenide (-C1, -Br, -I) eingeführt werden.

Die erfindungsgemäßen Copolymere weisen aufgrund ihres Syntheseweges sowohl ungesättigte Funktionalitäten als auch freie Aminogruppen auf. Die Synthese eines Copolymers der Formel I bzw. II basiert erfindungsgemäß auf einer nachträglichen Funktionalisierung des Homopolymers Polyethylenimin (Formel III).
Das Syntheseverfahren erlaubt eine aufwandgeringe und verfahrenstechnisch einfache Durchführung, die sowohl im kleinen Maßstab als auch im Hochdurchsatzverfahren möglich ist. Die Herstellung von maßgeschneiderten Copolymeren führt zu Substanzen mit exakt definierten Zusammensetzungen, die je nach Anwendungszweck variiert werden können. Ihre exakte Zusammensetzung kann auf einfache und schnelle Weise mittels Kernspinresonanzspektroskopie bestimmt werden. Dadurch können über einfache Variation der Ausgangsstoffmengen umfangreiche Bibliotheken von Copolymeren unterschiedlichster Zusammensetzung erstellt werden.

Die Erfindung soll nachstehend anhand von Ausführungsbeispielen näher erläutert werden.

### Beispiel 1:

Synthese von Hydrogelen mit exakt einstellbarem PEI-Anteil (zur späteren Anbindung und Freisetzung von genomischer Herings-DNA), wobei die Vernetzung der Copolymere über eine photoinitiierte Thiol-En Photoaddition analog zu Dargaville (T.R. Dargaville et al.: Poly(2-oxazoline) hydrogel monoliths via thiolene coupling, Macromol. Rapid Commun. 33, 2012, 1695-700) erfolgt.

Die nachstehende Formel zeigt die schematische Darstellung der Thiol-en Photoaddition von P(ButEnOx-*co*-EI) mit 2,2'-(Ethylenedioxy)diethanthiol in Anwesenheit des Katalysators DMPA unter UV-Licht (365 nm).

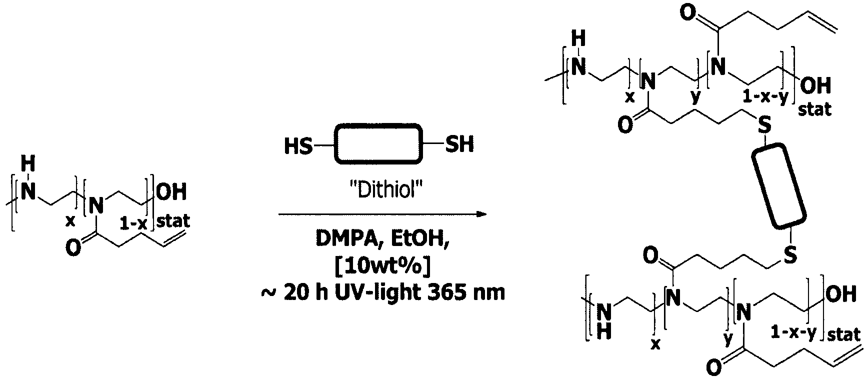

### Poly[2-(3-Butenyl)-2-oxazolin-co-ethylenimin]-basierte Hydrogele:

In einem Mikrowellenvial wurde das Copolymer P(ButEnOx-co-EI) in Ethanol gelöst. In einem zweiten Vial erfolgte die Lösung des Photoinitiators 2,2-Dimethoxy-2-phenylacetophenon und des bifunktionellen Thiols, 2,2'-(Ethylenedioxy)diethanethiol, ebenfalls in Ethanol (0.9:1.0 Thiol: Doppelbindung). Die kombinierten, klaren Lösungen (10 wt%) wurden 30 Minuten mit Stickstoff entgast und anschließend rund 24 Stunden UV-Licht (365 nm) ausgesetzt. Die einsetzende Gelbildung zeigte die erfolgreiche Hydrogelsynthese. Das erhaltene Gel wurde wiederholt mit Methanol und Wasser gewaschen. Anschließend erfolgte eine Gefriertrocknung.

Es konnte eine Bibliothek aus verschiedenen Hydrogelen ausgehend von entsprechenden Copolymeren hergestellt werden. Die synthetisierten Substanzen konnten umfangreich charakterisiert werden (Quellwert, vapour TGA, FT-IR, EA, solid ¹H-/¹³C- NMR, SEM).

### DNA-Studien - Ethidiumbromid-Test von P(ButEnOx-co-EI)-basierten Hydrogelen:

Die Hydrogele wurden 24 Stunden in HBG-Puffer (pH 7) gequollen. Anschließend wurde eine genomische DNA-Ethidiumbromid-Lösung hinzugefügt. Zu definierten Zeitpunkten wurde je ein Aliquot entnommen und nach erfolgter Fluoreszenzmessung zurück pipettiert. Die gezielte Freisetzung der zuvor gebundenen DNA konnte unter Zugabe einer Heparinlösung und einer Temperaturerhöhung auf 70°C innerhalb kürzester Zeit erreicht werden.

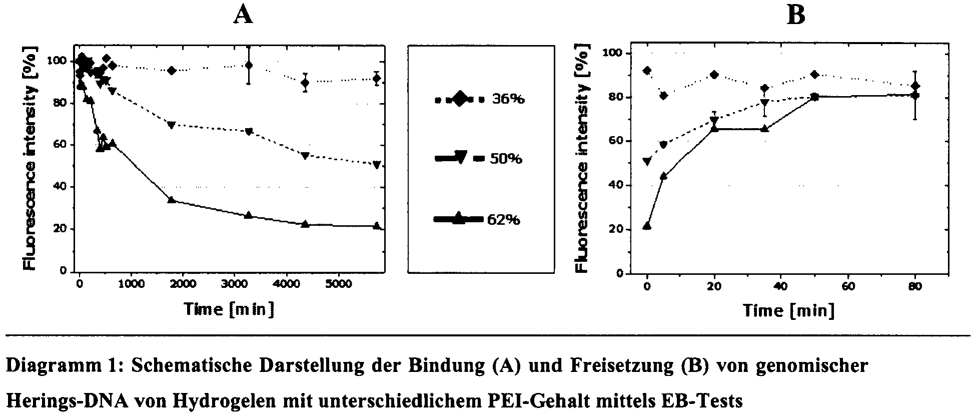

### Ergebnisse:

Eine Gelbildung tritt erst unterhalb eines PEI-Gehaltes von 75% auf.
Die Hydrogele zeigen neben ihrer zu erwartenden Unlöslichkeit ein typisches Quellverhalten in Wasser, welches stark vom PEI-Gehalt und vom Vernetzungsgrad (Menge des Dithiols) der Gele abhängt. Die DNA Bindungs-und Freisetzungskapazität ist abhängig vom PEI-Anteil innerhalb der Hydrogelstruktur. Zur gezielten Freisetzung ist neben einer Temperaturerhöhung auch die Anwesenheit von Heparin nötig. Dabei kann innerhalb kürzester Zeit (< 60 min) die DNA nahezu vollständig wieder freigesetzt werden.

### Beispiel 2:

Formulierung von Hydrogelbeads über eine Thiol-en Photoaddition analog einer Suspensionspolymerisation.

Mit der Darstellung der vorgeschlagenen neuen Copolymere als Hydrogelbeads wird eine extreme Oberflächenvergrößerung und damit verbunden eine effektivere DNA-Anbindung erreicht. Weiterhin besteht die Möglichkeit über die Änderung der Reaktionsbedingungen exakt definierte Beadgrößen einzustellen.

### P(ButEnOx-co-EI)-basierte Hydrogelbeads:

Als Ausgangsstoff diente das Copolymer P(ButEnOx-*co*-EI_{50%}). Dieses Copolymer und eine entsprechende Menge des Katalysators DMPA wurden in Ethanol gelöst (8 wt%) und anschließend mit dem Dithiol 2,2'-(Ethylenedioxy)diethanethiol versetzt. Durch das Hinzufügen von Paraffinöl und dem Stabilisator Span®80 konnte ein Zweiphasengemisch erzeugt werden. Nach 25 min Ausgasen mit N₂ erfolgte unter Rühren (375 rpm) bei Raumtemperatur und UV-Bestrahlung (365 nm) die Thiol-en Photoaddition. Nach 2,5 h wurde das entstandene Hydrogel abgetrennt und intensiv mit Ethanol und Wasser gewaschen. Anschließend wurde das Gel sechs Stunden in Wasser gequollen und gefriergetrocknet.

### Beispiel 3:

Anlagerung von Monoschichten an funktionalisierte Glasoberflächen über eine Thiol-en Photoaddition und die schrittweise Erzeugung von kovalent gebundenen Hydrogelschichten.

Mit der kovalenten Anbindung der vorgeschlagenen neuen Copolymere an thiolfunktionalisierte Oberflächen kann die effektive DNA-Anbindung und Freisetzung von Oberflächen erreicht werden. Durch den Einbau des bereits erwähnten Dithiols können schrittweise Hydrogelschichten aufgebaut werden (Übersicht 1), welche je nach Schichtdicke unterschiedliche DNA-Affinität aufweisen. Diese Anwendung der Anbindung und Freisetzung von genetischem Material, insbesondere DNA/RNA, von beschichteten Oberflächen soll beispielsweise in der mobilen Analytik (Chip-Diagnostik) zum Einsatz kommen.

In einem konischen Mikrowellenvial wurde das Copolymer P(ButEnOx-*co*-EI_{50%}) zusammen mit dem Photoinitiator 2,2-Dimethoxy-2-phenylacetophenon in Ethanol gelöst. Ein zuvor im Plasmaofen ausgeheiztes und mit 3-(Trimethoxysilyl)-1-propanethiol funktionalisiertes 1 x 1 cm² großes Glasplättchen wurde so platziert, dass das Rühren eines Rührfisches unterhalb der eingebrachten Glasplatte weiterhin möglich war. Das Vial wurde 30 Minuten mit Stickstoff entgast und anschließend rund 24 Stunden UV-Licht (365 nm) ausgesetzt. Die beschichtete Glasoberfläche (1. Klick) wurde wiederholt mit Wasser und Methanol gewaschen. Analog erfolgte der 2. Klick durch Zugabe des Vernetzers 2,2'-(Ethylenedioxy)diethanethiol anstatt des Copolymers. Erneut wurden die genannten Waschschritte durchgeführt. Die abermalige Reaktion mit dem beschriebenen Copolymer (3. Klick) führte zur formalen Ausbildung der Hydrogelschicht. Durch freie vorhandene Doppelbindungen konnte der schichtweise Aufbau bis zum 7. Klick durchgeführt werden, wobei auch weitaus mehr Schichten möglich sind.

| | | |
|---|---|---|
| 5. Klick | 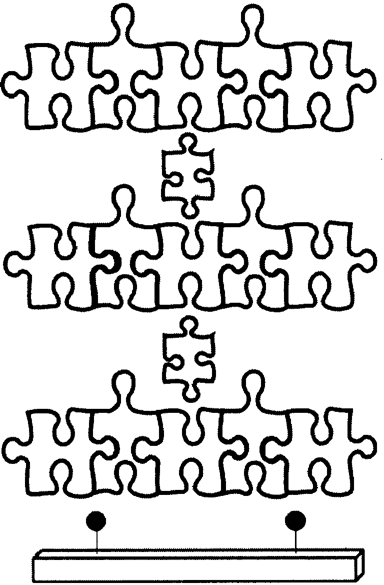 | 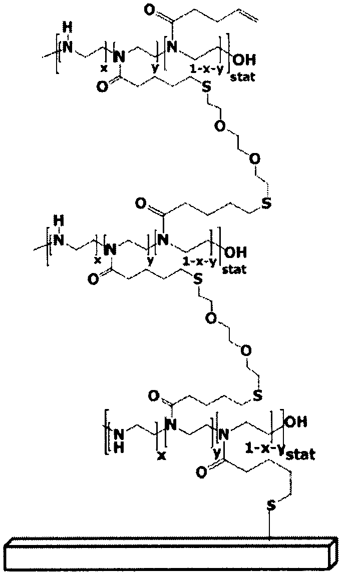 |
| 4. Klick | | |
| 3. Klick | | |
| 2. Klick | | |
| 1. Klick | | |
| Funktionalisierung Plasmareinigung | | |

### Übersicht 1: Chemischer Hintergrund der Beschichtung

Die erfolgreiche Beschichtung der Glasoberflächen konnte mittels Fluoreszenzmikroskopie gezeigt werden. Dazu wurde das beschriebene Copolymer mit dem Farbstoff Fluorescein markiert (∼1 %) und dieses beim nachzuweisenden Klick-Schritt an die Oberfläche addiert. Hierbei zeigte die behandelte Oberfläche auch nach intensivem Waschen eine erfolgreiche kovalente Anbindung durch eine erhöhte Fluoreszenz der markierten Probe im Vergleich zu einer farbstofffreien Beschichtung. Messungen eines Kratzers auf den beschichteten Oberflächen mittels Rasterkraftmikroskop ergaben für die erste Schicht (1. Klick) eine Dicke von 15 nm. Für die Ausbildung einer Hydrogelschicht (3. Klick) konnte eine Höhe von 35 nm bestimmt werden. Außerdem konnte eine erfolgreiche Anbindung mit Hilfe der Infrarotspektroskopie gezeigt werden.

## Patentansprüche

1. Poly(ethylenimin)- basierte Copolymere zur Anbindung und Freisetzung von genetischem Material in Form von DNA oder RNA bestehend aus Ethyleniminund 2-Oxazolineinheiten mit der folgenden allgemeinen Formel und jeweils unterschiedliche Oxazolineinheiten aufweisend: 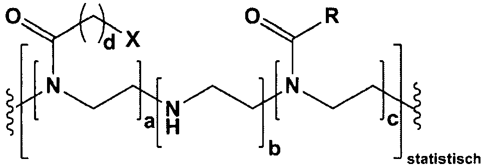 mit:
a, b, c: Anteil der jeweiligen Monomereinheiten mit a, b > 0, c > 0,
d: Länge der Seitenkette mit d = 1,
X: Doppel- oder Dreifachbindung,
R: H-, Alkyl- oder Aryl-Rest
und einer Copolymer-Kettenlänge zwischen 2 und 1000000 Einheiten.

2. Poly(ethylenimin)- basierte Copolymere zur Anbindung und Freisetzung von genetischem Material in Form von DNA oder RNA bestehend aus Ethylenimin- und 2-Oxazolineinheiten mit der folgenden allgemeinen Formel: 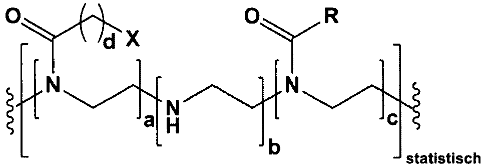 mit:
a, b, c: Anteil der jeweiligen Monomereinheiten mit a, b > 0, c = 0,
d: Länge der Seitenkette mit d = 2,
X: Doppelbindung,
R: H-, Alkyl- oder Aryl-Rest
und einer Copolymer-Kettenlänge zwischen 2 und 1000000 Einheiten.

3. Verfahren zur Herstellung von Poly(ethylenimin)- basierten Copolymeren zur Anbindung und Freisetzung von genetischem Material in Form von DNA oder RNA bestehend aus Ethylenimin- und 2-Oxazolineinheiten, wobei eine Synthese gemäß der folgenden allgemeinen Formel: 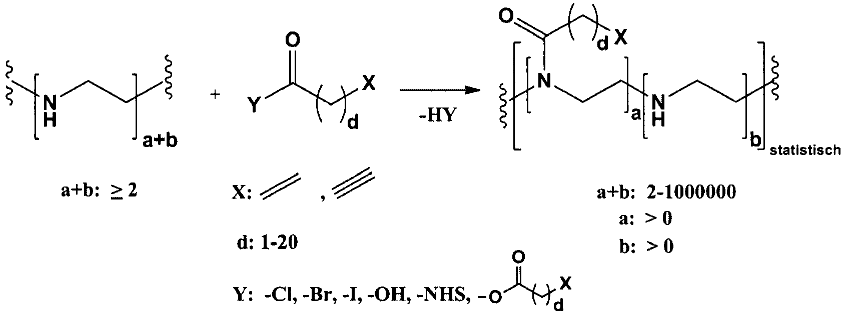 durchgeführt wird.

4. Verfahren gemäß Anspruch 3, **dadurch gekennzeichnet, dass** im Fall von -OH oder -NHS als Säure die Funktionalisierung in Gegenwart eines Aktivierungsreagenz in Form von 1-Ethyl-3-(3-dimethylaminopropyl) carbodiimid oder Dicyclohexylcarbodiimid durchgeführt wird.

5. Verfahren gemäß Anspruch 3, **dadurch gekennzeichnet, dass** die funktionelle Seitenkette über eine nachträgliche Funktionalisierung mittels ungesättigter Säureanhydride ( 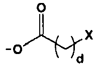 oder -halogenide in Form von Cl, Br oder I eingeführt wird.

6. Verwendung der Poly(ethylenimin)- basierten Copolymere gemäß Anspruch 1 oder 2 zur Funktionalisierung der Oberfläche eines Substrates zwecks Anbindung und Freisetzung von genetischem Material.

7. Verwendung gemäß Anspruch 6, **dadurch gekennzeichnet, dass** das Substrat in Form von Beads oder Partikeln vorliegt.

8. Verwendung der Poly(ethylenimin)- basierten Copolymere gemäß Anspruch 1 oder 2 zur Herstellung oder als Bestandteil von strukturierten Hydrogelen in Form von Beads oder Partikeln zwecks Anbindung und Freisetzung von genetischem Material.

9. Verwendung gemäß Anspruch 8, **dadurch gekennzeichnet, dass** das Hydrogel in Form von Beads oder Partikeln vorliegt.

## Claims

1. Poly(ethylene imine)-based copolymers for bonding to and releasing genetic material, in the form of DNA/RNA, consisting of ethylene imine- and 2-oxazoline units of the following general formula and always including different oxazoline units: 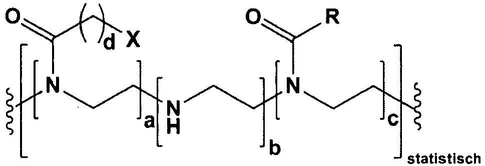 with:
a, b, c: proportion of the respective monomer units with a, b > 0, c > 0,
d: length of the side chain with d = 1,
X: double or triple bond,
R: H, alkyl or acrylic group
and a copolymer chain length of between 2 and 1000000 units.

2. Poly(ethylene imine)-based copolymers for bonding to and releasing genetic material in the form of DNA/RNA consisting of ethylene imine- and 2-oxazoline units of the following general formula: 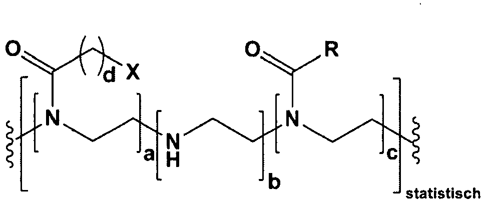 with:
a, b, c: proportion of the respective monomer units with a, b > 0, c = 0,
d: length of the side chain with d = 2,
X: double bond,
R: H, alkyl or aryl group.

3. A method for producing poly(ethylene imine)-based copolymers for bonding to and releasing genetic material in the form of DNA/RNA consisting of ethylene imine- and 2-oxazoline units, wherein a synthesis is carried out according to the following general formula:

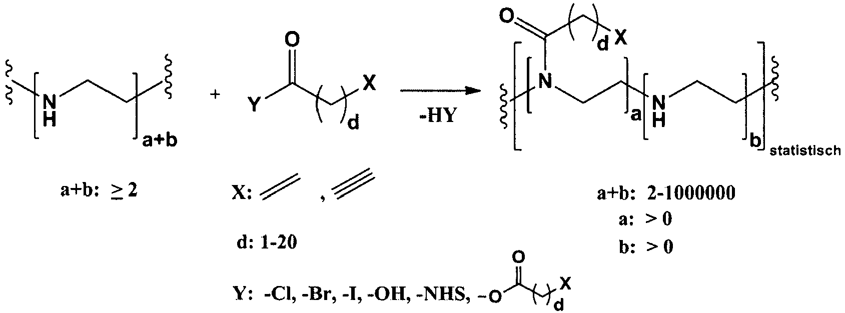

4. The method according to claim 3, **characterized in that** in the case of -OH or -NHS as acid, functionalization is performed in the presence of an activation reagent, in the form of 1-ethyl-3-(3-dimethylaminopropyl) carbodiimide or dicyclohexylcarbodiimide.

5. The method according to claim 3, **characterized in that** the functional side chain is introduced via subsequent functionalization by means of unsaturated acid anhydrides ( 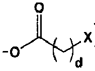 ) or acid halides in the form of Cl, Br or I.

6. Use of the poly(ethylene imine)-based copolymers according to claim 1 or 2 for the functionalization of the surface of a substrate in order to bond and release genetic material.

7. Use according to claim 6, **characterized in that** the substrate is provided in the form of beads or particles.

8. Use of the poly(ethylene imine)-based copolymers according to claim 1 or 2 for the production or as a component of structured hydrogels in the form of beads or particles in order to bond or release genetic material.

9. Use according to claim 8, **characterized in that** the hydrogel is provided in the form of beads or particles.

## Revendications

1. Copolymères à base de poly(éthylène-imine) pour la liaison et la libération de matériel génétique sous forme d'ADN ou ARN se composant des entité d'éthylène-imines et 2-oxazolines ayant la formule générale suivante et comportant respectivement des entités d'oxazoline différentes: 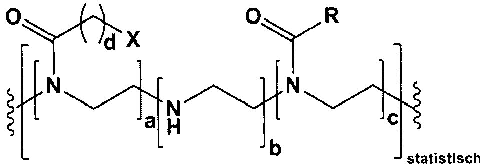 avec:
a, b, c: Proportion des entités respectives du monomère avec a, b > 0, c > 0,
d: Longueur de la chaîne latérale avec d = 1,
X: Double ou triple liaison,
R: Groupe H, alkyle ou aryle
et une longueur de la chaîne de copolymère entre 2 et 1000000 entités.

2. Copolymères à base de poly(éthylène-imine) pour la liaison et la libération de matériel génétique sous forme d'ADN ou ARN se composant des entités d'éthylène-imines et 2-oxazolines ayant la formule générale suivante: 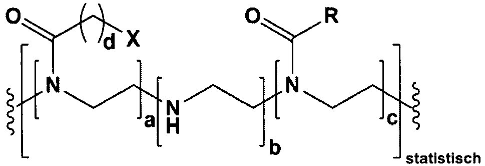 avec:
a, b, c: Proportion des entités respectives du monomère avec a, b > 0, c = 0,
d: Longueur de la chaîne latérale avec d = 2,
X: Double liaison,
R: Groupe H, alkyle ou aryle
et une longueur de la chaîne de copolymère entre 2 et 1000000 entités.

3. Procédé pour la production des copolymères à base de poly(éthylène-imine) pour la liaison et la libération de matériel génétique sous forme d'ADN ou ARN se composant des entités d'éthylène-imines et 2-oxazolines ayant la formule générale suivante et une synthèse étant effectuée suivant la formule générale suivante:

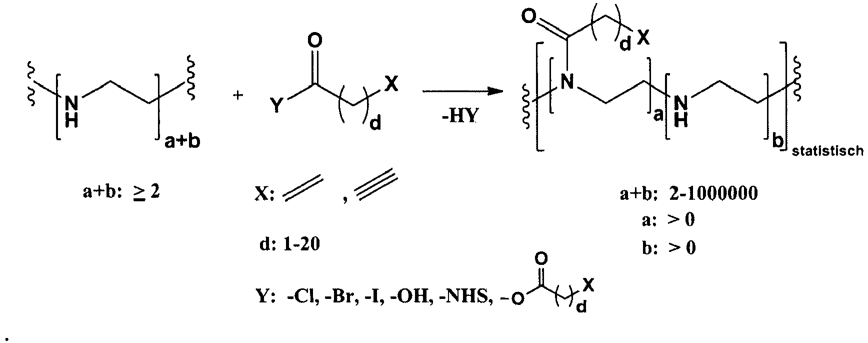

4. Procédé suivant la revendication 3 est **caractérisé en ce que**, dans le cas de -OH ou -NHS comme acide, la fonctionnalisation est effectuée en présence d'un réactif d'activation sous forme d'1-éthyle-3-(3-diméthylaminopropyl)carbodiimide ou dicyclohexylcarbodiimide.

5. Procédé suivant la revendication 3 est **caractérisé en ce que** la chaîne latérale fonctionnelle est introduite par une fonctionnalisation ultérieure au moyen des anhydrides acides ( 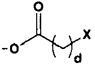 ) ou halogénures d'acides insaturés sous forme de Cl, Br ou I.

6. Utilisation des copolymères à base de poly(éthylène-imine) suivant la revendication 1 ou 2 pour la fonctionnalisation de la surface d'un substrat dans le but de la liaison et la libération de matériel génétique.

7. Utilisation selon la revendication 6 est **caractérisée en ce que** le substrat se présente sous forme de billes ou particules.

8. Utilisation des des copolymères à base de poly(éthylène-imine) suivant la revendication 1 ou 2 pour la production ou comme composant des hydrogels structurés sous forme de billes ou particules dans le but de la liaison et la libération de matériel génétique.

9. Utilisation selon la revendication 8 est **caractérisée en ce que** l'hydrogel se présente sous forme de billes ou particules.
